# EUROPEAN PATENT SPECIFICATION

(11) **EP 0 852 783 B1**
(45) Date of publication and mention of the grant of the patent: **08.03.2000**
(21) Application number: 96928595.6
(22) Date of filing: 30.08.1996
(51) Int. Cl.: G09B 5/00, G09B 23/18

(54) **APPARATUS FOR USE AS AN EDUCATIONAL TOY**
GERÄT ZUR VERWENDUNG ALS LERNSPIELZEUG
APPAREIL UTILISABLE EN TANT QUE JOUET EDUCATIF

(30) Priority: 27.09.1995 GB 9519698
(43) Date of publication of application: 15.07.1998
(73) Proprietor: De Rivaz, Anthony, Chevalley, St. Albans, Hertfordshire AL1 3SB (GB)
(72) Inventor: De Rivaz, Anthony, Chevalley, St. Albans, Hertfordshire AL1 3SB (GB)
(74) Representative: Jones, Graham H.
(86) International application number: GB9602109
(87) International publication number: WO9712349

(56) References cited:
- EP-A- 0 135 633
- WO-A-94/28348
- DE-A- 2 049 119
- DE-U- 9 401 567
- US-A- 3 594 689
- US-A- 4 376 538
- US-A- 4 449 942
- US-A- 4 969 827
- US-A- 5 423 684

## Description

This invention relates to apparatus for use as an educational toy. The apparatus may help children develop logical skills.

The advent of home computers has seen children becoming adept at using computers. However, there is a tendency for the computers to be used solely for playing computer games, and most of these computer games do not help a child develop logical skills.

Additionally, research has hi-lighted possible dangers inherent in exposing children to computers and their visual display units at too early an age and for too long. Damage to eyesight can occur because the childrens' eyes are still developing and the children tend to stare at screens of the visual display units for long periods. These dangers are compounded by the fact that the visual display units purchased for the children tend to be cheap and of a low quality.

In addition to the above mentioned problems, there is a further problem in that children can become addicted to computer games. Children who become so addicted may become withdrawn and anti-social. The children may become ever demanding of more computer games, thereby placing a continual demand on parents often without realising that the computer games are expensive.

EP-A-0135633 discloses a building block which is cube-shaped and which contains an electronic component. The invention is based on the need for schools to be able to teach electronics without the need for difficult and possibly hazardous soldering. In order to avoid this need, the electronic components are put in the blocks which can then be connected together.

US-A-4969827 discloses a building block for electronic circuitry. The building block has areas for mounting electronic circuitry thereon. The invention has arisen out of the need to personalize mobile telephones. There is disclosed a method of providing an interconnecting container with an array of posts or fingers with edge cards. The result is not user-friendly.

US-A-3594689 discloses a building block for an electronic construction kit. The invention has arisen from the need to facilitate ease of connecting the blocks together, to replace an earlier magnetic attraction method of connecting building blocks together.

The prior art as represented by EP-A-0135633, US-A-4969827 and US-A-3594689 may be summarized as providing electrical construction apparatus seeking to interconnect building blocks containing electric or electronic circuitry. However, the building blocks are too complicated and they are prone to incorrect interconnection. It is also possible to produce dangerous short circuits if the operators are unskilled. Base or fixing plates are often required, rendering the product non-portable.

It is an aim of the present invention to provide apparatus which can be used as an educational toy and which does not suffer from the above problems.

Accordingly, the present invention provides apparatus for use as an educational toy, which apparatus comprises a plurality of blocks, the blocks being electronic blocks with each block having its own electronic circuit whereby different blocks are able to perform different electronic functions, the blocks each having at least one input and/or at least one output which firstly enables the blocks to be physically connected together and which secondly enables the blocks to be electrically connected together whereby the blocks are able to be assembled in an order chosen by a user to convert at least one input signal for a chosen one of the blocks into at least one output signal for another chosen one of the blocks, characterised in that each said input and/or output comprises at least three contact members for enabling the blocks to be electrically connected together with two of the contact members being for providing power for the circuit.

The apparatus may be used by parents and teachers in order to set children tasks to achieve, the tasks requiring the blocks to be assembled in a required order. In so assembling the blocks, the children learn logical skills. The building blocks of the present invention are easy and safe to use by young children.

The apparatus of the invention may be one in which the blocks are such that they cannot be inter-connected so as to create a short circuit.

The contact members are preferably pins but other types of contact members may be employed, for example strips or wires.

Each block may have at least one light device which lights up to indicate when the output signal is present. The light device is preferably a light emitting diode light device but other types of light device may be employed.

The apparatus may be one in which there is a plurality of the building blocks, and in which at least one of the building blocks acts as an interface with other devices in order to drive such devices or to be driven by such devices.

The building blocks may each have identifying means for identifying the function that will be performed by the building block. The identifier means may be a visual identifier means such for example as a coloured identifier means. Alternatively or in addition, the identifier means may be an audible identifier means.

The apparatus is preferably battery powered. In addition or as an alternative, the apparatus may be mains powered via a transformer.

The blocks may perform the functions of electronic AND gates, OR gates, one way delay elements, and signal inverters. If desired, the blocks may be such that they do not affect the signal, such blocks being able to be used as spacer blocks.

The blocks may be configured for connection in a line. Some blocks may be in the form of corner blocks. Where the corner blocks are square or rectangular, then the corner blocks may have inputs on two adjacent sides, and outputs on two opposite sides. The blocks may also be in the form of Y-blocks having one input and two outputs. Generally, the blocks can be formed in any suitable and appropriate shape.

The apparatus may include two way delay blocks.

The apparatus may also include a sequencer block and/or switch blocks.

The blocks may be produced in the shape of a character attractive to a child.

The blocks can be connected together in a wide variety of ways. Similarly, the blocks can be connected together to perform a wide variety of functions, for example to sound a buzzer a number of times.

Where it is desired for the blocks to operate external devices, then these external devices may be, for example, a toy lighthouse, a toy lift or a toy train. The advantage of having the assembled building blocks interface and operate with other devices is that the children can then see a positive tangible result from the way in which the blocks are assembled. The blocks may help children to develop logical thought patterns in order to solve problems and to achieve desired end results. The apparatus is able to be produced considerably cheaper than home computers, and the apparatus does not cause children to become addicted to it, or to damage their eyes.

Embodiments of the invention will now be described solely by way of example and with reference to the accompanying drawings in which:
Figures 1 and 2 show a first block;
Figures 3 and 4 show a second block;
Figures 5 and 6 show a third block;
Figures 7 and 8 show a fourth block;
Figures 9 and 10 show a fifth block;
Figures 11 and 12 show a sixth block;
Figure 13 shows a seventh block;
Figure 14 shows an eighth block;
Figure 15 shows a ninth block;
Figure 16 shows a tenth block;
Figure 17 shows an eleventh block;
Figure 18 shows a plurality of the blocks connected together;
Figure 19 shows how two blocks are connected together; and
Figure 20 is a section through the connection of the two blocks shown in Figure 19.

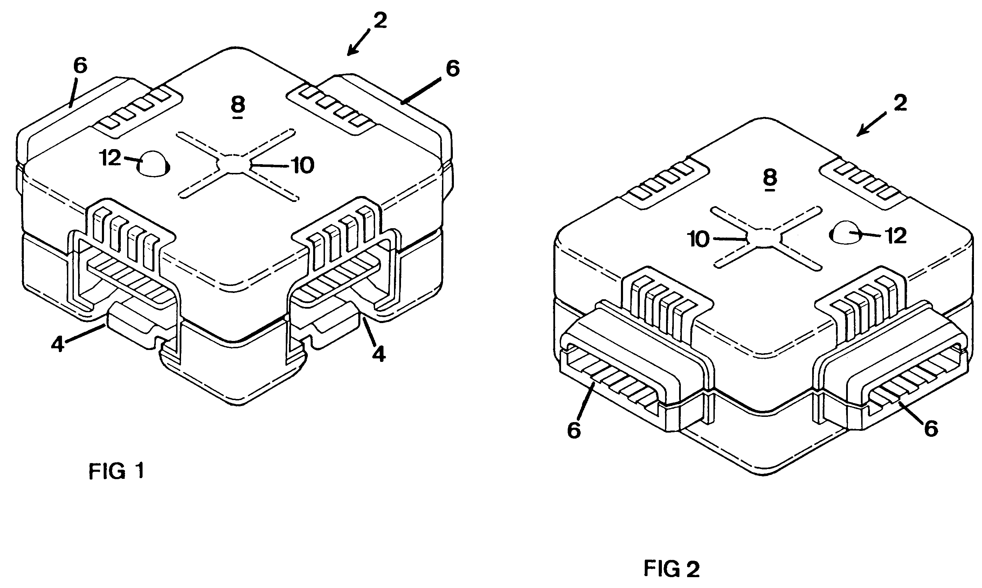

Referring to Figures 1 and 2, there is shown an electronic block 2 having two inputs 4 and two outputs 6. The electronic block 2 is square shaped in plan and has rectangular sides as shown. The block 2 has a top portion 8 provided with identifier means in the form of a cross 10. The cross 10 indicates the function that will be performed by the block 2 and in this case, the cross 10 indicates that the block 2 permits an electrical cross over. Thus the block 2 is useful as a corner unit because it has the inputs 4 on two adjacent sides, and the outputs 6 on the other two adjacent sides.

The block 2 is provided with a light emitting diode 12 which projects through the top portion 8. The light emitting diode 12 illuminates when a correct electrical connection has been made and an output signal is present.

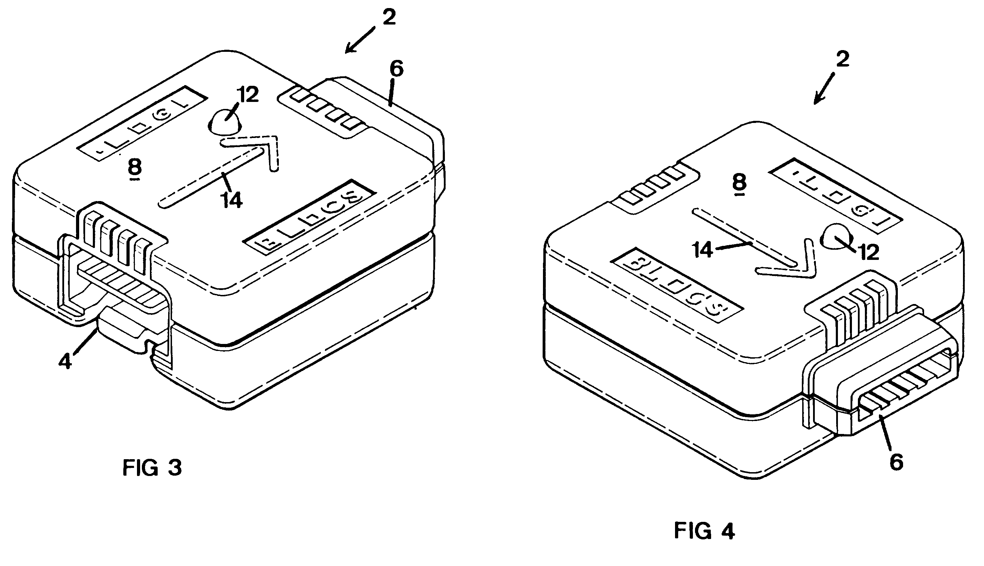

In Figures 3 - 20, similar parts as in Figures 1 and 2 have been given the same reference numerals for ease of comparison and understanding.

In Figures 3 and 4, the block 2 is such that it has an arrow 14 instead of the cross 10. The arrow 14 indicates that the block 2 will function to allow a straight connection between the single input 4 and the single output 6.

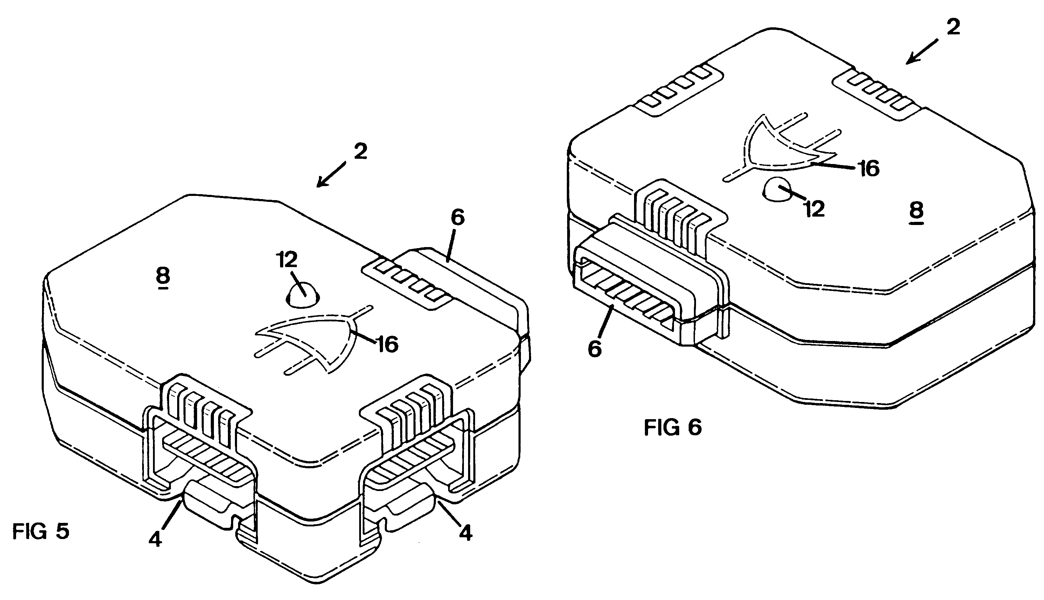

In Figures 5 and 6, the block 2 is rectangular in plan. The block 2 has two inputs 4 and one output 6. The top portion 8 has a symbol 16 indicating a logical OR gate.

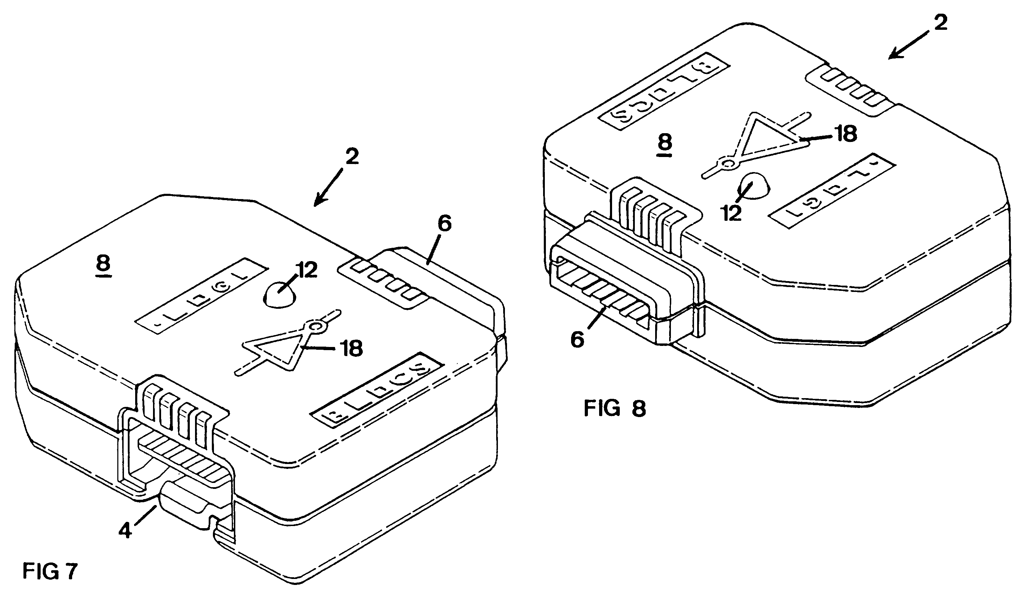

The block 2 shown in Figures 7 and 8 is rectangular in plan and it has one input 4 and one output 6. The top portion has a symbol 18 indicating that the block 2 will function as an inverter.

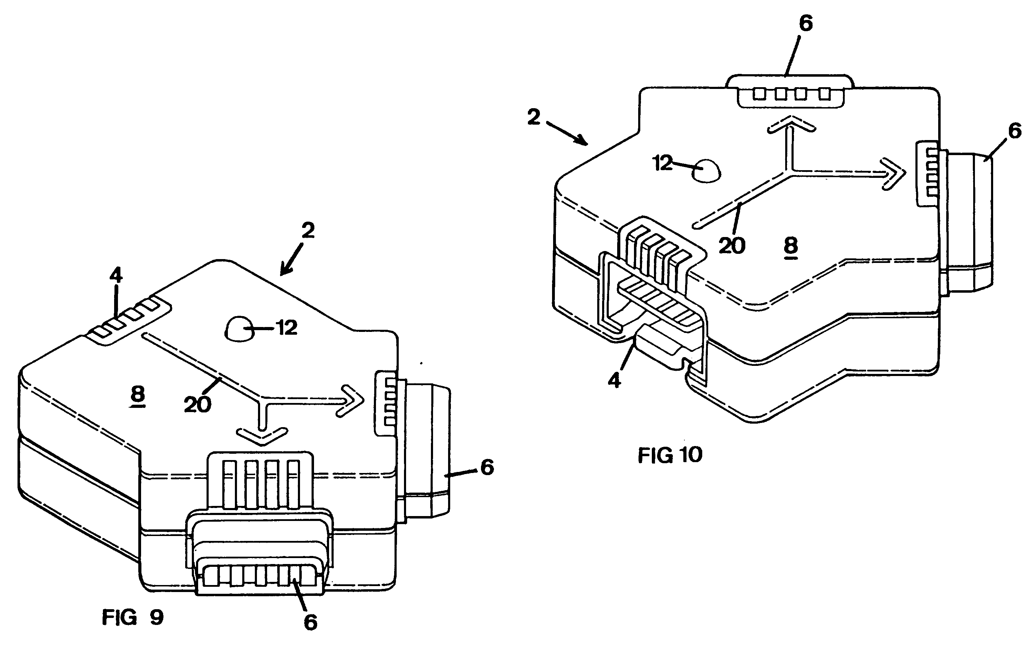

In Figures 9 and 10 the block 2 is shaped as shown. It has one input 4 and two outputs 6. The symbol 20 indicates the direction of the signal from the input 4 to one or both of the outputs 6.

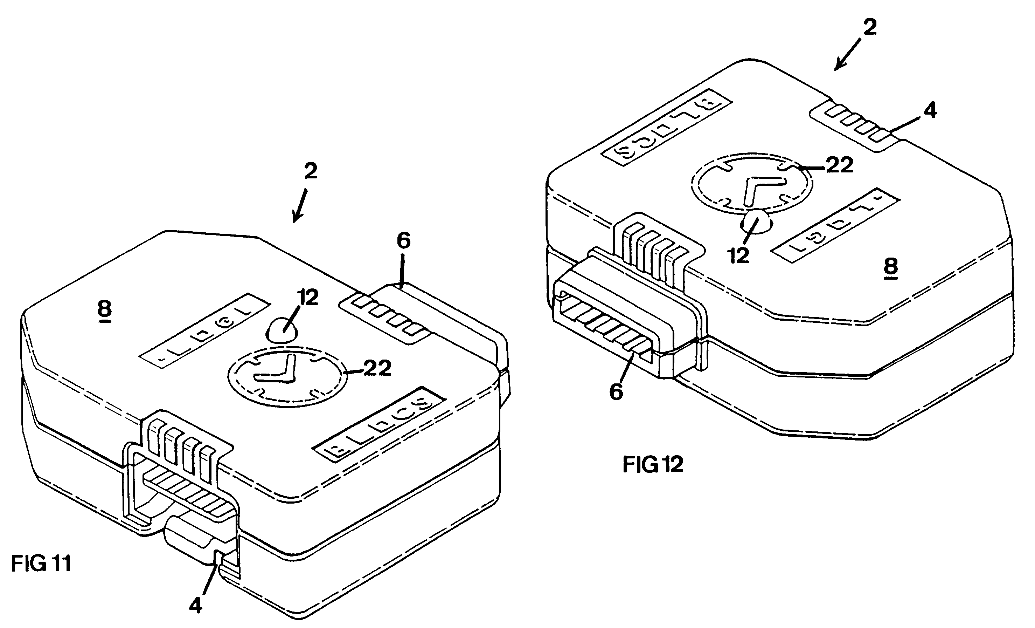

In Figures 11 and 12, the block 2 has one input 4 and one output 6. The symbol 22 indicates that the block 2 will perform a delay function.

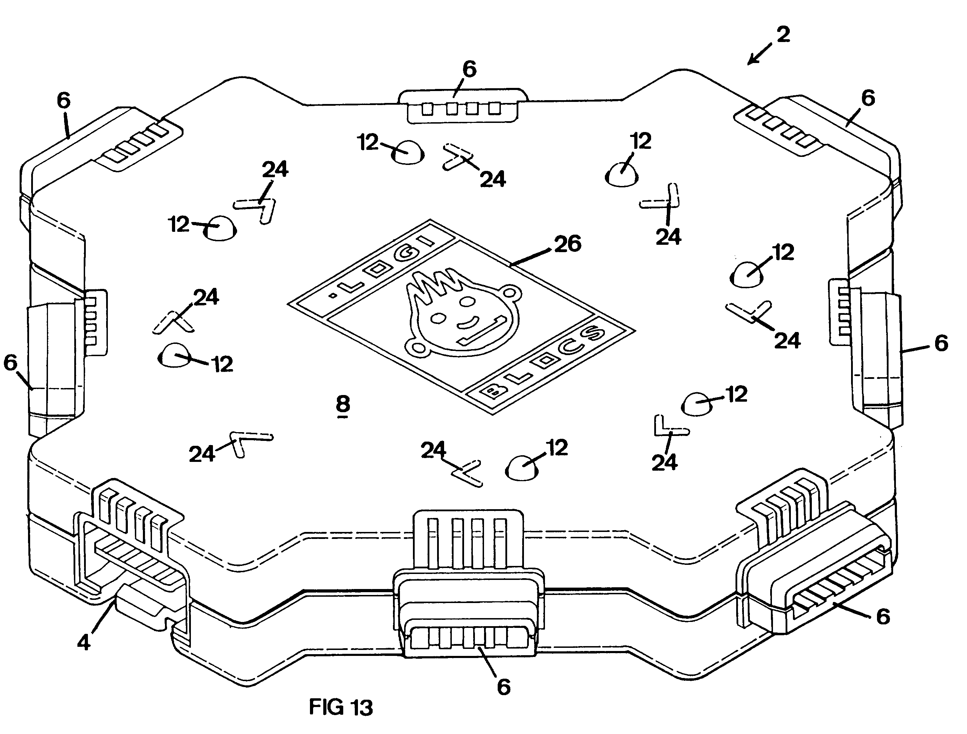

Figure 13 shows a sequencer block 2 in the illustrated shape with one input 4, seven outputs 6, light emitting diodes 12, and symbols 24. The symbols 24 indicate the direction of connection around the block 2. The top portion 8 is provided with a design 26 intended to be attractive to a child.

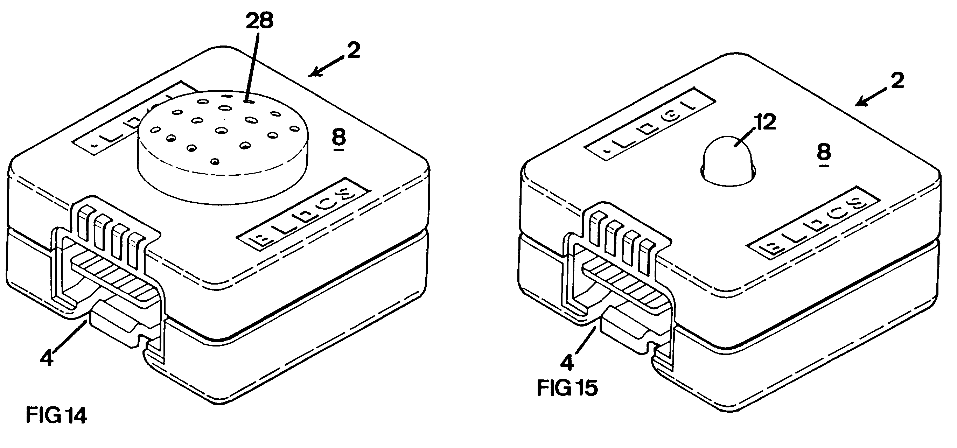

Figure 14 shows a block 2 with one input 4. The top portion 8 is provided with sound generator means 28 from which an audible sound is emitted when a correct electrical connection is made and a signal is present.

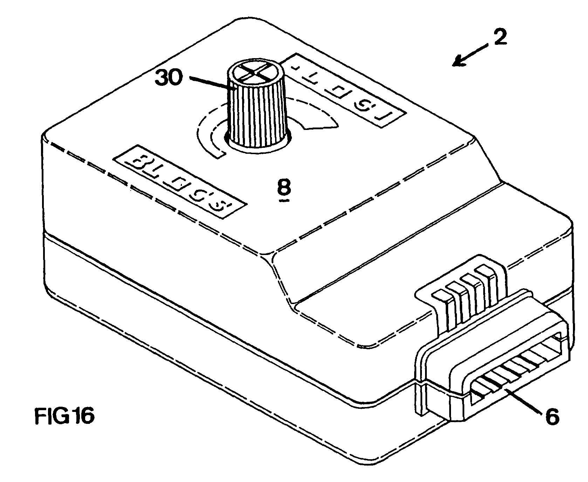

Figure 15 shows a building block 2 with one input 4 and a light emitting diode 12 extending through the top portion 8. The light emitting diode 12 illuminates when a correct connection is made and if a signal is present.

Figure 16 shows a block 2. The block 2 has one output 6. The top portion 8 has a knob 30 which can be rotated to increase or decrease the speed of a pulsed output signal generated within the block 2.

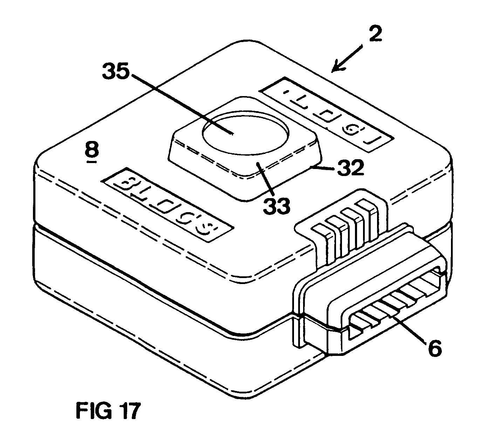

Figure 17 shows a block 2. The block 2 has one output 6. The top portion 8 has a formation 32 having a body portion 33 and a lens 35. The body portion 33 is able to act as a button so that if the body portion 33 is depressed, then an output signal from the block 2 is created. In an alternative embodiment, if a light is shone into the lens 35, then an output signal is again created, but this time due to the light falling on a light sensitive component in the block 2.

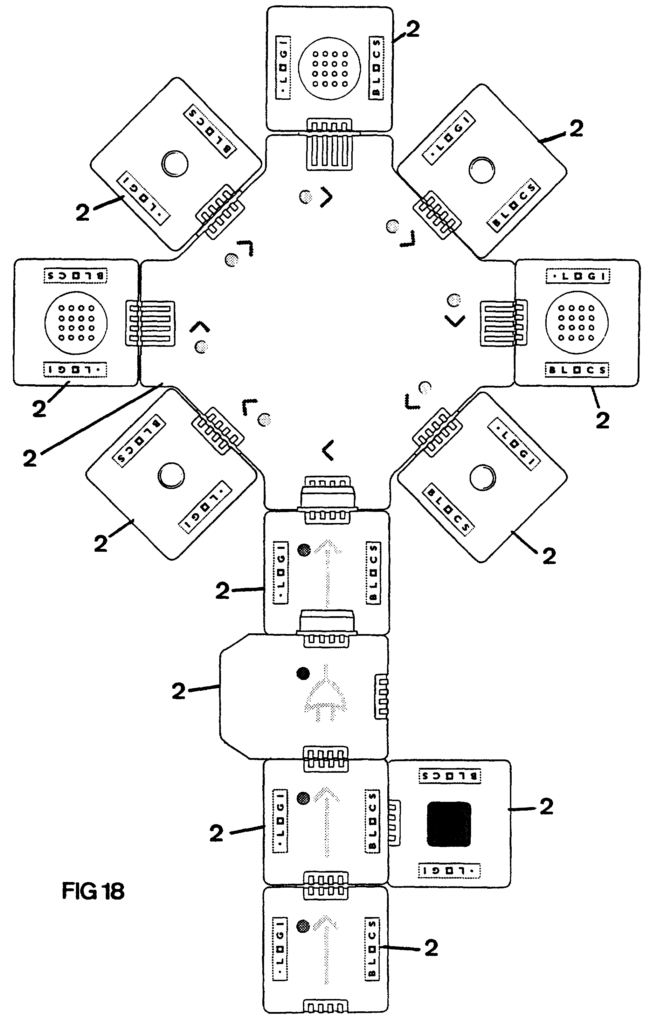

Figure 18 shows apparatus 34 for use as a toy and comprising a plurality of the blocks 2.

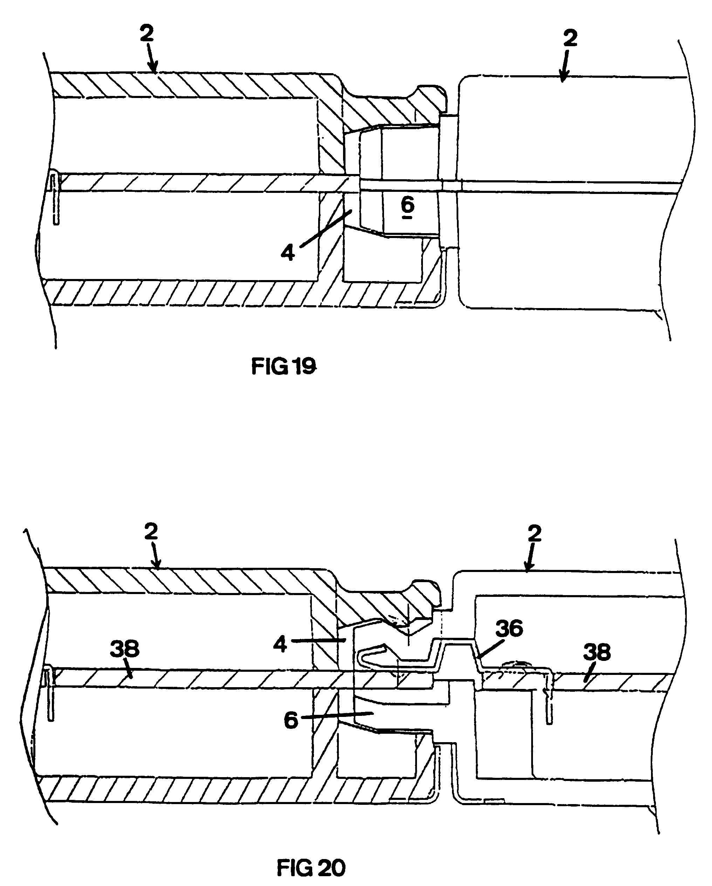

Figures 19 and 20 illustrate how two blocks 2 are connected together. It will be seen how an output 6 is able to be pushed into an input 4. Thus the electrical connection is effected by contact strips 36 shown in Figure 20. The contact strips 36 may alternatively be wires or pins. Inside each block 2 is a printed circuit board 38 containing appropriate components.

It is to be appreciated that the embodiments of the invention described above with reference to the accompanying drawings have been given by way of example only and that modifications may be effected. Thus, for example, the connection of the blocks together may be effected via appropriate contacts in the form of pins instead of contact strips. In addition to the symbols 10, 14, 16, 18, 20, 22, 24, the blocks may be provided with a background colour and/or an audible signature in order to identify the function of the blocks. If desired, the blocks may be produced in an outside shape which is the same as the electronic circuitry contained within the block, see for example block 2 of Figure 7 with the symbol 18 indicating the inverter function. If desired, another block (not shown) may provide a logical AND gate symbol and function.

The building blocks may contain a variety of electronic components in addition to the light emitting diodes 12. Other types of light than light emitting diodes 12 may be employed if desired. The blocks may be arranged to effect any suitable and appropriate electronic function including a sequencing function and a wide variety of switching functions. The apparatus will usually be powered by a battery supply but it may be mains connectable via a transformer if desired.

If desired, the blocks 2 may be interfaced with other devices, either to drive such devices or to be driven by such devices. Thus, for example, the blocks 2 may be interfaced to react to a series of input pulses from an external force, to process that series of pulses according to the arrangement of blocks 2, and to use the processed signal to drive an external device. Where the blocks have an audible facility, then sound units may be provided which provide a different pitch output or a different predetermined sound pattern which helps children understand the function and effect of the block. Usually, the battery power source is connected to one block only at any input, regardless of how many blocks are connected together.

The blocks may be arranged to form a loop. The blocks may be arranged to first perform an inverting function to an input signal, and then to perform a delaying function to the input signal so that the blocks flash on and off continuously and automatically.

The blocks are modular so that children can add or subtract blocks from the apparatus of the invention, and observe the results without disconnecting the power source. The blocks are interconnectable such that they are safe to disconnect without first disconnecting the power source. The blocks 2 cannot be connected incorrectly or upside down so as to form a short circuit or malfunction. Certain combinations of blocks will be found by the children to have certain specific functions. These combinations can be retained for future use. Such an approach mirrors computer programming and gives an introduction to the concepts of higher level programming.

Where the blocks are to be used with an external output, then the blocks may be arranged to operate, for example, a lighthouse or a lift. The lift may be a cardboard or plastics structure having a motor which drives the lift automatically, the lift being powered by a battery in the lift structure. It may then be the task of a child to assemble the blocks in such a way as to control the lift. Such an exercise teaches the use of the blocks as a motor control. When the blocks are used with a lighthouse, then the blocks may be used to control a bulb mounted in the lighthouse in order to cause the bulb to flash in a predetermined sequence, for example three times in quick succession every ten seconds.

The blocks may be used to control a toy train on a track. Blocks having a delay function and an inverting function may be used to control the direction and power of the train on the track and related signaling.

The blocks may be used such that they have to be assembled as part of a game of skill. Points may be awarded for achieving functionality within an increasingly complex logical circuit, which circuit may include one or more blocks of random and changing functionality. Players may attempt to frustrate the plan of other players, or players may work together with other players to achieve a predetermined result.

The apparatus of the invention may be provided with a series of tasks for children to perform. The solutions to the tasks may be given if desired. The apparatus may be sold as a basic kit to which can be added further blocks and/or outside elements such as the lighthouse or the lift. Examples of other outside elements that may be used and/or sold with the apparatus of the invention include pressure mats, level crossings, traffic lights, motors, solenoids, light dependent resistors, radio modules, counters, bi-metallic strip sensors, infra-red light emitting diodes and receivers, microphones, wind sensors, moisture probes, electronic dice, electronic scales, and photo electric cells.

The apparatus is advantageous in that it is able to teach children to develop logical skills in an entertaining way. The apparatus is however able to be produced at low cost and at a cost which is much cheaper than the cost of a home computer. In addition, the dangers of addiction to computer games are avoided.

If desired, the blocks may be of different shapes to those shown, and they may have different combinations of inputs and outputs. The blocks may be produced in any suitable and desired sizes. Preferably, the blocks are produced to be easily portable.

## Claims

1. Apparatus for use as an educational toy, which apparatus comprises a plurality of blocks (2), the blocks (2) being electronic blocks with each block having its own electronic circuit whereby different blocks (2) are able to perform different electronic functions, the blocks each having at least one input (4) and/or at least one output (6) which firstly enables the blocks (2) to be physically connected together and which secondly enables the blocks (2) to be electrically connected together whereby the blocks (2) are able to be assembled in an order chosen by a user to convert at least one input signal for a chosen one of the blocks (2) into at least one output signal for another chosen one of the blocks (2), characterised in that each said input (4) and/or output (6) comprises at least three contact members (36) for enabling the blocks (2) to be electrically connected together with two of the contact members (36) being for providing power for the circuit.

2. Apparatus according to claim 1 in which the blocks (2) are such that they cannot be inter-connected so as to create a short circuit.

3. Apparatus according to claim 1 or claim 2 in which the contact members (36) are pins, strips or wires.

4. Apparatus according to any one of the preceding claims in which each block (2) has at least one light device (12) which lights up to indicate when the output signal is present.

5. Apparatus according to claim 4 in which the light device (12) is a light emitting diode device (12).

6. Apparatus according to any one of the preceding claims in which at least one of the blocks (2) acts as an interface with other devices in order to control such devices or to be controlled by such devices.

7. Apparatus according to any one of the preceding claims in which the blocks (2) each have identifier means (10) for identifying the function that will be performed by the block (2).

8. Apparatus according to claim 7 in which the identifier means (10) is a visual identifier means (10).

9. Apparatus according to claim 7 or claim 8 in which the identifier means (10) is an audible identifier means.

10. Apparatus according to any one of the preceding claims and which is battery operated.

## Patentansprüche

1. Gerät zur Verwendung als ein Lernspielzeug, welches Gerät ein Mehrzahl von Blöcken (2) aufweist, wobei die Blöcke (2) elektronische Blöcke sind, wobei jeder Block seine eigene elektronische Schaltung hat, wodurch unterschiedliche Blöcke (2) in der Lage sind, unterschiedliche elektronische Funktionen auszuführen, wobei die Blöcke jeweils mindestens einen Eingang (4) und/oder mindestens einen Ausgang (6) haben, was es erstens ermöglicht, daß die Blöcke (2) körperlich miteinander verbunden werden und was es zweitens ermöglicht, daß die Blöcke (2) elektrisch miteinander verbunden werden, wodurch die Blöcke in einer durch einen Benutzer gewählten Anordnung zusammengebaut werden können, um mindestens ein Eingangssignal für einen ausgewählten der Blöcke (2) in mindestens ein Ausgangssignal für einen anderen ausgewählten der Blöcke (2) zu verwandeln, dadurch gekennzeichnet, daß jeder besagter Eingang (4) und/oder Ausgang (6) mindestens drei Kontaktglieder (36) aufweist, um zu ermöglichen, daß die Blöcke (2) elektrisch miteinander verbunden werden, wobei zwei der Kontaktglieder (36) vorgesehen sind, um Strom für die Schaltung zu liefern.

2. Gerät nach Anspruch 1, in dem die Blöcke (2) derart sind, daß sie nicht in einer Weise miteinander verbunden werden können, daß sie einen Kurzschluß erzeugen.

3. Gerät nach Anspruch 1 oder 2, in dem die Kontaktglieder (36) Stifte, Streifen oder Drähte sind.

4. Gerät nach irgendeinem der vorhergehenden Ansprüche, in dem jeder Block (2) mindestens eine Lichteinrichtung (12) hat, die aufleuchtet, um anzuzeigen, wenn das Ausgangssignal vorliegt.

5. Gerät nach Anspruch 4, in dem die Lichteinrichtung (12) eine lichtemittierende Dioden-Lichteinrichtung (12) ist.

6. Gerät nach irgendeinem der vorhergehenden Ansprüche, in dem mindestens einer der Blöcke (2) als eine Schnittstelle zu anderen Einrichtungen wirkt, um solche Einrichtungen zu steuern oder durch solche Einrichtungen gesteuert zu werden.

7. Gerät nach irgendeinem der vorhergehenden Ansprüche, in dem die Blöcke (2) jeweils Kennzeichen-Einrichtungen (10) haben, um die Funktion zu kennzeichnen, die durch den Block (2) ausgeführt wird.

8. Gerät nach Anspruch 7, in dem die Kennzeichen-Einrichtungen (10) optische Kennzeichen-Einrichtungen (10) sind.

9. Gerät nach Anspruch 7 oder Anspruch 8, in dem die Kennzeichen-Einrichtungen (10) hörbare Kennzeichen-Einrichtungen sind.

10. Gerät nach irgendeinem der vorhergehenden Ansprüche, und welches durch eine Batterie gespeist ist.

## Revendications

1. Appareil utilisable comme jouet éducatif, lequel appareil comprend une pluralité de blocs (2), les blocs (2) étant des blocs électroniques ayant chacun son propre circuit électronique, les différents blocs (2) étant capables de remplir différentes fonctions électroniques, les blocs ayant chacun au moins une entrée (4) et / ou au moins une sortie (6) qui permet premièrement aux blocs (2) d'être connectés physiquement ensemble et qui permet deuxièmement aux blocs (2) d'être connectés électriquement ensemble, les blocs (2) pouvant être assemblés dans un ordre choisi par l'utilisateur pour convertir au moins un signal d'entrée pour un bloc choisi parmi les blocs (2) en au moins un signal de sortie pour un autre bloc choisi parmi les blocs (2), caractérisé en ce que chaque dite entrée (4) et / ou sortie (6) comprend au moins trois membres de contact (36) pour permettre aux blocs (2) d'être connectés électriquement ensemble, deux des membres de contact (36) servant à fournir de l'énergie au circuit.

2. Appareil selon la revendication 1, dans lequel les blocs (2) sont tels qu'ils ne peuvent être connectés entre eux de manière à créer un court-cuicuit.

3. Appareil selon la revendication 1 ou la revendication 2, dans lequel les membres de contact (36) sont des broches, des bandes ou des fils.

4. Appareil selon une quelconque des revendications précédentes, dans lequel chaque bloc (2) a au moins un dispositif lumineux (12) qui s'allume pour indiquer quand le signal de sortie est présent.

5. Appareil selon la revendication 4, dans lequel le dispositif lumineux (12) est un dispositif à diode électroluminescente (12).

6. Appareil selon une quelconque des revendications précédentes, dans lequel au moins un des blocs (2) agit comme une interface avec les autres dispositifs afin de contrôler ces dispositifs ou d'être contrôlé par ces dispositifs.

7. Appareil selon une quelconque des revendications précédentes, dans lequel les blocs (2) ont chacun un moyen d'identification (10) pour identifier la fonction qui sera remplie par le bloc (2).

8. Appareil selon la revendication 7, dans lequel le moyen d'identification (10) est un moyen d'identification visuel (10).

9. Appareil selon la revendication 7 ou la revendication 8, dans lequel le moyen d'identification (10) est un moyen d'identification audible.

10. Appareil selon une quelconque des revendications précédentes et qui fonctionne avec des piles.
